# EUROPEAN PATENT SPECIFICATION

(11) **EP 3 123 106 B1**
(45) Date of publication and mention of the grant of the patent: **29.08.2018**
(21) Application number: 15712372.0
(22) Date of filing: 26.03.2015
(51) Int. Cl.: G01B 7/00

(54) **DEVICE FOR CHECKING DIMENSIONS OF A MECHANICAL PIECE**
VORRICHTUNG ZUR PRÜFUNG DER ABMESSUNGEN EINES MECHANISCHEN TEILS
DISPOSITIF POUR VÉRIFIER LES DIMENSIONS D'UNE PIÈCE MÉCANIQUE

(30) Priority: 26.03.2014 IT BO20140163
(43) Date of publication of application: 01.02.2017
(73) Proprietor: Marposs Societa' Per Azioni, 40010 Bentivoglio (BO) (IT)
(72) Inventor: GOLINELLI, Guido, I-40121 Bologna (IT); ZIPRANI, Francesco, I-50126 Firenze (IT)
(86) International application number: PCT/EP2015/056547
(87) International publication number: WO 2015/144819

(56) References cited:
- EP-A1- 0 470 397
- US-A- 3 987 551
- US-A- 4 291 466

## Description

### Technical field

The present invention relates to a device for checking dimensions of a mechanical piece. This device can be used in different kinds of measuring cells or measuring heads which can be operated manually by an operator or automatically in measuring assemblies or assembly lines.

### Background art

There are known devices for checking dimensions of a mechanical piece with one or more transducers to provide signals indicative of the dimensions of the piece to be checked.

The measuring range of such checking devices depends on geometrical features of the components and especially on the kind of transducer used.

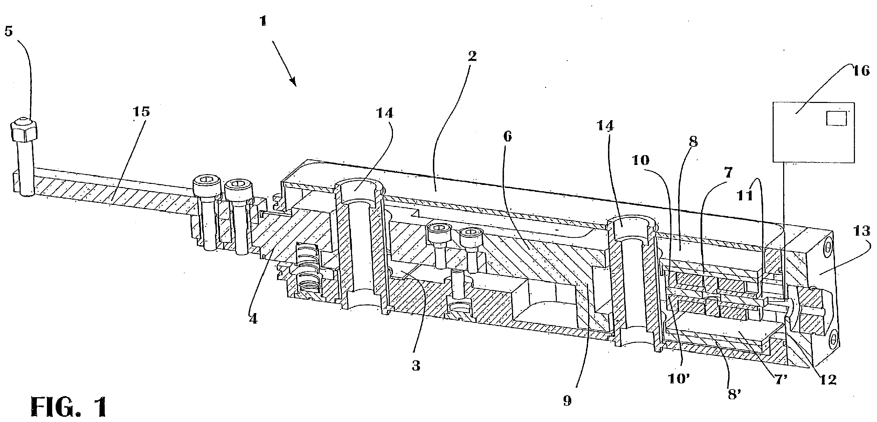

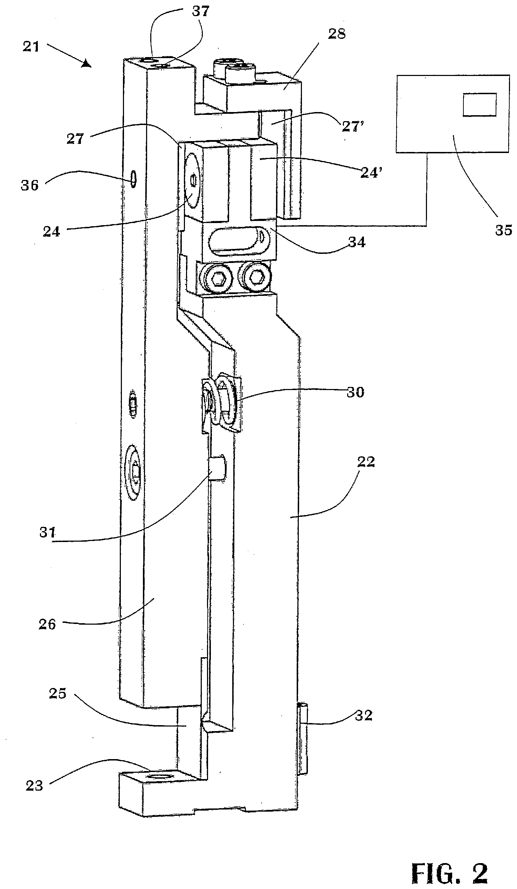

A known device is described in the patent No. EP0470397B1 and comprises a stationary support where one inductive or capacitive transducer (figure 1) or two inductive or capacitive transducers (figure 2) is/are housed, and a movable arm which carries a feeler and is connected to the stationary support by means of a fulcrum. Such arm is a lever and serves as armature for the transducer (-s). After the contact between the piece and the feeler, the arm, starting from a rest position, performs a rotation about the fulcrum. The variation in the distance between the arm and the transducer(-s) implies voltage variations which cause the generation of signals. The signals are processed to provide information about the dimensions of the mechanical piece. In the solution shown in figure 2 of the patent No. EP0470397B1, the signals which have equal magnitude but opposite sense and are provided by the two transducers as a result of variations in the distance between the transducer(-s) and the arms, are processed by a differential circuit which determines a measuring value proportional to the difference of the two input signals. The measuring value is indicative of the deviation of the actual dimensions of the piece from the nominal dimensions. Using two transducers coupled to a differential system according to figure 2 of the European patent enables to compensate errors due to environmental changes (i.e. temperature) and to slightly increase the linearity range of the transducer system, and thus of the measuring range, with respect to the solution shown in figure 1. However, the increase in the measuring range is not substantial and is limited by the mechanical features of the device. An other known device for checking dimensions of a mechanical piece is described in US 4,291,466 A1 and comprises a stationary support, a movable support carrying a feeler and a couple of transducers, each including a first and a second part fixed to the stationary and the movable support, respectively.

### Disclosure of the invention

Object of the present invention is to provide a device for checking dimensions of a mechanical piece which enables to have a measuring range that is substantially larger than that one of the known devices using the same kind of transducers, limiting at the same time the overall dimensions and the costs of the transducer system.

These and other objects are achieved by a device according to the attached claims.

The device according to the present invention includes a couple of transducers, each comprising a first part and a second part which have contiguous measuring ranges. It is possible to use transducers with the same measuring range or transducers which have different measuring ranges. The total measuring range of the device according to the invention is substantially larger than the measuring range of each transducer and can even correspond substantially to the sum of the measuring ranges of the transducers. Using the device according to the invention, the available measuring range is thus substantially larger, for example double or almost double the measuring range of a single transducer, without needing to increase considerably the dimensions of the transducer and thus avoiding problems with overall dimensions and high costs.

In a rest position, that is before the checking operation starts, the parts of each transducer are arranged at a predetermined mutual distance. In preferred embodiments, the two parts of one of the transducers are arranged at a minimum distance from each other (they are in contact with each other, for example), while the two parts of the other transducer are arranged at a larger distance than the maximum distance which delimits the measuring range of that transducer, as it will be hereinafter described in detail. In different embodiments, the parts of each transducer can be differently arranged, for instance substantially at the same distance from each other, such distance being predetermined and depending on the total measuring range of the device.

After the contact with the mechanical piece to be checked, the feeler displaces causing a variation in the distance between the first part and the second part of each transducer. As a consequence of the distance variations the each transducer generates a signal. A processing unit acquires the signals generated by the transducers and determines which of the two signals is a usable signal, that is a measuring signal, by carrying out operations of analysis and automatic selection which are per se known and here not described. In other words, the processing unit can identify which of the two signals is included in the measuring range of the respective transducer and is thus a measuring signal including information which can be used to determine a value indicative of the dimensions of the mechanical piece. As it is known, the measuring range of each transducer is delimited at least by a maximum distance between the respective parts of the transducer, beyond which the signals emitted by the transducers cannot be considered measuring signals.

As previously stated, to ensure a substantially larger measuring range, for example twice the measuring range of a single transducer, the measuring ranges of the single transducers must be contiguous. In order that the measuring ranges of the transducers are contiguous, the parts of each transducers must be arranged at a predetermined mutual distance, set in advance depending on the desired measuring range of the device.

To ensure the contiguousness, preferably a minimal overlapping area of the measuring ranges of the transducers is provided. As at said overlapping area of the measuring ranges both the signals of the transducers are measuring signals, the processing unit, according to known selection settings, considers just one of the two signals.

The arrangement of the two transducers inside the device is set in advance depending on the total measuring range that the device must have, by defining the mutual distances at which the parts of each transducer are arranged. More specifically, when the parts of the first transducer are arranged at a minimum mutual distance defined for example by a mechanical abutment element, or are in contact with each other, the mutual distance between the parts of the second transducer is determined as a function of the desired total measuring range. In other words, the parts of the second transducer are arranged at a predetermined mutual distance defining the measuring range of the device.

For example, if it is necessary to use the measuring range to its full extension, the parts of the second transducer must be arranged at a distance which substantially corresponds to the sum of the maximum distances delimiting the measuring range of each transducer.

On the contrary, if it is sufficient to have a smaller total measuring range, which is in any case larger than the measuring range of each of the transducers, the measuring ranges of the transducers can overlap partially. In this case, the parts of the second transducer are arranged at a mutual distance which corresponds to the sum of the maximum distance delimiting the measuring range of one of the transducers and the maximum distance of the measuring range of the other transducer minus the "portion" corresponding to the overlap between the measuring range of the first transducer and the one of the second transducer.

In substance, to get the advantages provided by the presence of a couple of transducers, it is necessary that the parts of the second transducer, the position of which determines - as previously stated - the total measuring range of the device, are arranged at a mutual distance included in an interval of values that is defined at one end by a distance value bigger than the maximum distance delimiting the measuring range of each transducer, and at the other end by a value corresponding substantially to the sum of the maximum distances delimiting the measuring ranges of the transducers.

In other words, in a rest position of the movable support with respect to the stationary support, when the first part and the second part of one of said transducers are in contact with each other, the first part and the second part of the other transducer are arranged at a mutual distance which is bigger than the maximum distance delimiting the measuring range of each transducer. According to a particular solution, the first part and the second part of the other transducer are arranged at a mutual distance which is substantially equal to the sum of the maximum distances delimiting the measuring ranges of said two transducers.

### Brief description of the drawings

A device for checking dimensions of a mechanical piece according to the present invention is hereinafter described with reference to the attached sheets of drawings given by way of non-limiting examples, wherein:
- figure 1 is a perspective view of a longitudinal section of the device according to a first embodiment;
- figure 2 is a front perspective view of the device according to a second embodiment;
- figure 3 is a schematical front view of the device according to a third embodiment; and
- figure 4 is a longitudinal section of the device according to a forth embodiment.

### Best mode of carrying out the invention

A device for checking dimensions of a mechanical piece according to the present invention comprises a stationary support to which a movable support carrying a movable feeler is connected, and a couple of inductive transducers. Each transducer includes two parts facing each other: a first part is fixed to the movable support, while a second part is fixed to the stationary support.

The first part and the second part of each transducer are arranged at a predetermined mutual distance. Variations in that distance due to displacements of the movable support cause each transducer to generate a signal, in particular a measuring signal.

Figure 1 shows a measuring cell 1 comprising a stationary support with a main parallelepiped body, or casing 2, with through holes 14 - two in the embodiment shown in the figure - to fix the casing to measuring apparatuses or assemblies. At the through holes 14 the casing 2 comprises seats, shown in the figure, to house heads of screws or other fastening elements. In this way, the fastening elements do not protrude from the casing and do not increase the overall dimensions of the measuring cell.

Inside the casing 2, a movable support is fastened by means of a flat deformable element, or fulcrum, 3. One end of the fulcrum 3 is connected to the casing 2 and the other end is connected to the movable support. The movable support comprises a base body 4 and an arm 6. In the embodiment shown in the figure, the base body 4 and the arm 6 are connected to each other by means of screws, but they can also be parts of a single element. One end of the base body 4, protruding from the casing 2 through a dedicated hole, carries a feeler 5 which is connected to the base body 4 by means, for example, of a rod 15. The other end of the base body 4, opposite to the one carrying the feeler 5, carries the arm 6. The end of the arm 6 opposite to the one connected to the base body 4 comprises two portions 8, 8', which are rigidly connected by a third portion 9 transverse to the first two portions and have mutually parallel sides facing each other. Each of the two portions 8, 8' carries, at the side facing the other portion, a matching element which has a substantially plane surface made of ferromagnetic material, or plate 7, 7'. In this way the two plates 7, 7' face each other.

In this embodiment the movable support has through holes corresponding to those of the casing 2. However, it is possible to position the fastening elements of the measuring cell in a different way, so that they are not included in the overall dimensions of the movable support and the latter has no holes.

Moreover, in the measuring cell shown in figure 1, the fulcrum 3 is placed in the middle between the ends of the movable support 4, but different arrangements are also possible.

A couple of cores made of ferromagnetic material with windings 10, 10' is fixed to the casing 2 which comprises a central portion with two opposite areas to which the cores 10, 10' are fixed. The central portion is placed between the mutually parallel sides of the portions 8, 8' of the arm 6 so as to be enclosed by the latter and be substantially parallel to the sides of the portions 8, 8'. The cores 10, 10' are fixed to a bearing element 11 in such a way that the respective measuring surfaces, that is the surface of each core facing the corresponding plate 7, 7', face in the opposite sense. Each plate 7 (7') together with the respective core 10 (10') defines a transducer. Plate and core identify, for instance, the first part and the second part of the transducer, respectively.

In the preferred embodiment, shown in figure 1, the casing 2 includes an opening 12 at the end opposite to the one from which the feeler 5 protrudes. At the opening 12, the stationary support also comprises a closing element 13 connected to the casing 2 in a removable manner. The central portion carrying the cores 10, 10' is rigidly connected to the closing element 13, which is fastened to the casing 2 by means, for example, of screws.

The operation of the measuring cell is the following. In the rest position, that is when the feeler does not touch the surface of the piece to be checked, the measuring surface of one of the two cores, in this case the core 10, is substantially in contact with the respective plate 7 (the abutment can be partial because in general in the rest position the two surfaces are slightly inclined to each other), while the core 10' lies at a certain distance from the respective plate 7'. In the embodiment shown in the figure, this distance corresponds, in principle, to the total measuring range of the device, that is for example the sum of the measuring ranges of the single transducers. After the contact between the feeler 5 and the piece to be checked, the movable support, that is the base body 4 and the arm 6, moves, in this case rotates about the fulcrum 3 causing a variation in the distance between each plate and the respective core. The rotation of the movable support causes indeed the plate 7 to move away from the core 10 and the plate 7' to approach progressively the core 10'. The transducers are coupled to a processing unit, schematically shown and marked with the reference number 16 in figure 1, which acquires the signals generated by both the transducers and identifies which signals are indicative of the dimensions of the mechanical piece, that is are measuring signals.

The presence and arrangement of the two transducers together with their configuration enable substantially to double the measuring range with respect to the one provided by a single transducer.

In the embodiment of figure 1 the couple of transducers, that is the two cores 10, 10' with the respective plates 7, 7', are arranged at the end of the device opposite to the one carrying the feeler 5, while the fulcrum is arranged between the feeler and the transducers. Different configurations are however possible.

The embodiment shown in figure 2, for example, has a structure analogous to the one of the embodiment shown in figure 1, but the transducers are arranged near the feeler, while the fulcrum is positioned in an area of the measuring cell spaced away from transducers and feelers.

In the measuring cell 21 shown in figure 2 a stationary support comprises a main body 22 which has a fastening through hole 23 at one end to fix the main body 22, for example, to a measuring assembly, and carries at the other end a couple of cores made of ferromagnetic material with windings 24, 24' arranged in such a way that the respective measuring surfaces face in opposite sense. At the end of the main body 22 carrying the cores 24, 24', the stationary support also comprises a central portion with two opposite areas to which the cores are fixed. A deformable plate element, or fulcrum 25, with an intermediate section of smaller diameter is provided at the end of the main body 22 with the through hole 23. One end of the fulcrum 25 is connected to the main body 22 and the other end is connected to a movable support comprising a base body 26. A matching element with a substantially plane surface made of ferromagnetic material, or plate, 27 is connected near the end of the base body 26 opposite to the end connected to the fulcrum 25. The plate 27 is fixed to the side of the base body 26 facing the main body 22 in such a way that the plate 27 faces one of the cores, in this case the one marked with the reference number 24, fixed to the main body 22.

At the end of the base body 26 near which the plate 27 is fixed, the movable support further includes an L-shaped support carrying another plate 27' arranged in such a way as to face the other core marked with the reference number 24'. The upper end of the base body 26 and the side of the L-shaped support which carry the plates define two portions - rigidly connected to each other - of the movable support with mutually parallel sides facing each other. These portions enclose the end of the main body 22 to which the cores are fixed. Each core and the respective plate define a transducer.

As the L-shaped support 28 is an element separate from the base body 26 and is connected thereto by means of screws, it is possible to adjust its position. According to a different embodiment, it can be integral with the base body 26.

A feeler, not shown in the figure and adapted to touch the piece to be checked, is connected to the base body 26. It can be fixed to the base body 26 at the same height of the cores 24, 24' in such a way that it is aligned with the cores and its displacement direction lies along the central axis of the cores. Placing the feeler at this point of the base body 26, schematically indicated in figure 2 with the hole 36, the extent of the displacement of the feeler is equal to the extent of the displacements occurring between the parts of the transducers. However, it is possible to arrange the feeler in different positions with respect to the movable support 26, by fixing it, for example, to an additional arm connected to end holes 37 of the movable support 26.

Between the base body 26 and the main body 22 there are an elastic element, or spring, 30 urging the feeler so that it touches the piece to be checked, and an abutment element 31 which limit the movements - due to the thrust of the spring 30 - of the base body 26 about the fulcrum, and thus define the rest position of the base body 26. It is possible to adjust the spring 30 and the abutment element 31 by means, for example, of dowels or screws provided in holes in the external wall of the base body 26.

The main body 22 can further comprise a fastening element 32 for the electrical cables of the transducers.

In the described measuring cell 21 the base body 26 carrying the plates 27, 27' and the main body 22 carrying the cores 24, 24' are two separate components connected by means of an additional component forming a fulcrum.

However, the base body 26 and the main body 22 can be formed as parts of a U-shaped integral element carrying at one end a couple of cores and at the other end a first plate and an additional L-shaped support carrying a second plate. The U-shaped element has a section with reduced thickness at the base of one of arms, which serves as fulcrum.

The operation of the measuring cell is analogous to the one described with reference to the measuring cell shown in figure 1. In the rest position, that is when the feeler doesn't touch the piece to be checked, the base body 26 is urged by the spring 30 against the abutment element 31, and the position of the L-shaped support 28 is adjusted in such a way that the measuring surface of one of the two cores, in this case the core 24', is in contact with the respective plates 27', while the core 24 lies at a distance from the respective plate 27 which substantially corresponds to the total measuring range of the device. After the contact between the feeler and the surface of the piece to be checked, the base body 26 moves, in this case rotates about the fulcrum 25 and the distances between core and plates change. Indeed, the rotation of the base body 26 causes the plate 27' to progressively move away from the respective core 24' and the plate 27 to progressively approach the core 24.

Figure 2 shows the base body 26 at an intermediate position. The variation in the distance between plate and core causes the generation of signals which are transmitted by the transducers to a processing unit, which is schematically shown in figure 1 and marked with the reference number 35. After the processing unit has identified the usable measuring signal, it determines a value indicative of the dimensions of the mechanical piece.

As previously stated, the presence of two transducers with contiguous measuring ranges enables substantially to get a larger total measuring range, for example substantially double the measuring range of a single transducer.

The measuring cell 21 can also include, as shown in figure 2 and previously mentioned, a control or adjusting system to adjust the distance between parts of the movable support and stationary support, and thus between plates and cores of the transducers. As explained hereinbefore, the mutual position of the parts of the transducers, in particular of the parts of one of the two transducers, in the rest position defines the measuring range of the device and is set in advance before the checking operations start. If the actual measuring range of one or both the transducers doesn't correspond to the nominal measuring range, it is possible to change the position of the parts of the transducers before the checking operations, so that the plate 27 and the core 24 lie at a mutual distance suitable for the measuring range of the device.

The adjustment can be made by acting on different components of the adjusting system.

The stationary support is divided into two components: a first component defining the main body 22 with the fastening hole 23, and a second component, or bearing component, 34 for the cores which defines the central portion of the stationary support and includes slotted holes - two slotted holes in the embodiment of figure 2, but not shown - housing fastening elements, for example screws, to fasten the second component 34 to the first component 22. The presence of slotted holes enables to adjust the transverse position of the bearing component 34 with respect to the main body 22 so as to change the distance between cores and plates. Also the L-shaped support, which is a part of the movable support and carries the plate 27', includes slotted holes enabling to move the plate 27' away from or toward the core 24', as previously stated.

The adjustment can be made in different ways.

It is possible to act on the stationary support by changing, thanks to the slotted holes, the position of the bearing component 34 with respect to the main body 22 so that the distance between the plate 27 and the core 24 corresponds to the sum of the actual measuring ranges of the two transducers, and on the L-shaped support 28 to bring the plate 27' (almost) into contact with the respective core 24'.

Alternatively, it is possible to act on the movable support, more specifically on the spring by causing the base body 26, and the plate 27 fixed thereto, to move away from or toward the main body 22, and adjust suitably the position of the L-shaped support. It is, however, preferable to make the adjustment by acting on the stationary support rather than opting for the adjustment which acts on structural elements of the measuring cell, such as the fulcrum and/or the spring, by changing their features also in rest conditions.

Even the measuring cell shown in figure 1 and hereinbefore described may include a control or adjusting system like the one described with reference to the embodiment shown in figure 2, allowing to adjust the mutual distances between the first part and the second part of at least one of the two transducers.

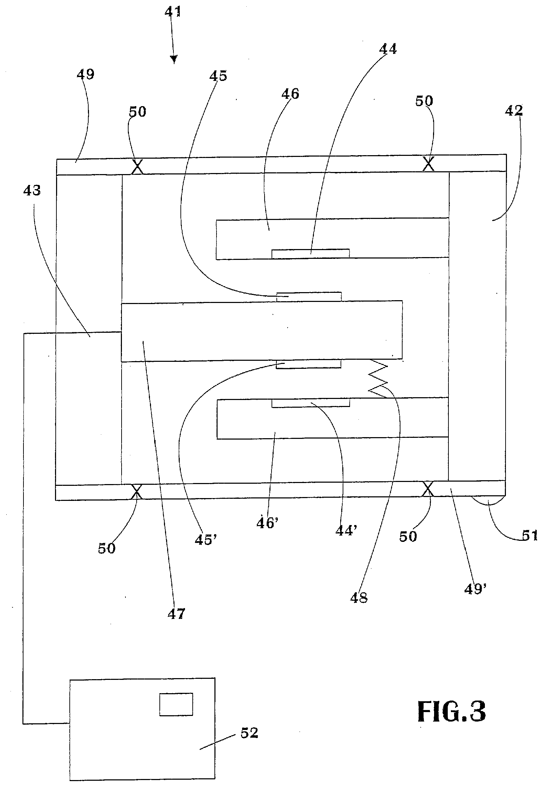

According to a different configuration shown schematically in figure 3, a measuring head 41 includes a couple of transducers arranged inside a parallelogram-shaped structure, that is a deformable structure consisting of four sides parallel two by two. More specifically, two parallel sides of the parallelogram-shaped structure are defined by two rigid supports, that is a movable support with a base body 42 and a stationary support with a main body 43. A couple of matching elements with a substantially plane surface made of ferromagnetic material, or plates 44, 44' and a couple of cores with windings 45, 45' are fixed to the base body 42 and the main body 43, respectively. Plates 44, 44' and cores 45, 45' define the first parts and the second parts of the transducers, respectively. The cores 45, 45' are coupled to a processing unit which is represented very schematically and marked with the reference number 52. The movable support further includes two support arms 46, 46', connected to the base body 42 and perpendicular to the latter, to which the plates 44, 44' are fixed. The arms 46, 46' can also be formed as parts of the base body 42. The support arms 46, 46' define two portions of the movable support which are rigidly connected to each other and have mutually parallel sides facing each other. Each plate 44, 44' is fixed to the parallel side of the arm 46, 46' so that the plates 44, 44' face each other.

The stationary support includes a support rod 47 connected to the main body 43 at an intermediate portion of the latter, so that one part of the support rod 47 is placed between the two arms 46, 46' carrying the plates 44, 44'. The two cores 45, 45' are fixed to the two opposite sides of the rod 47 so that each core faces one of the plates. The rod 47 defines a central portion of the stationary support which is enclosed by the portions of the movable support defined by the support arms 46, 46'.

As in the embodiments described hereinbefore, in the rest position, that is before the checking operation starts, the measuring surface of one of the two cores, in this case the core 45, is substantially in contact with the respective plate 44, while the core 45' lies at a distance from the respective plate 44' which corresponds - in this case - to the sum of the measuring ranges of the single transducers. Figure 3 shows an intermediate measuring position in which, after the movement of the movable support, the core 45 has moved progressively away from the plate 44 and the core 45' has progressively approached the plate 44'.

To facilitate the correct mutual positioning of plates and cores, the support rod 47 can be a separate component, instead of being integral with the main body 43, and include a flange to fix it to the main body 43 by means of adjusting elements not shown in figure 3. Acting on the adjusting elements is possible to adjust the positioning of the rod, and thus the arrangement of the cores 45, 45' with respect to the plates 44, 44'.

A movable feeler, which is schematically shown in figure 3 and marked with the reference number 51 and adapted to touch the surface of the piece to be checked and cause the movements of the movable support, is connected to one end of the base body 42.

The movable support and the stationary support are connected to each other by means of a couple of elements 49, 49', mutually parallel, each including two portions with reduced thickness, or fulcra 50 indicated by two crosses in the figure. The parallelogram-shaped structure, where the fulcra 50 define four parallel rotation axes, enables displacements of the movable support carrying the plates after the contact between the feeler and the piece to be checked. A spring 48 is arranged between the movable support and the stationary support to ensure the contact between the feeler 51 and the piece to be checked and define the above-mentioned rest position.

For the operation of the measuring head, reference is made to what has been described hereinbefore with regard to the other kinds of measuring cell.

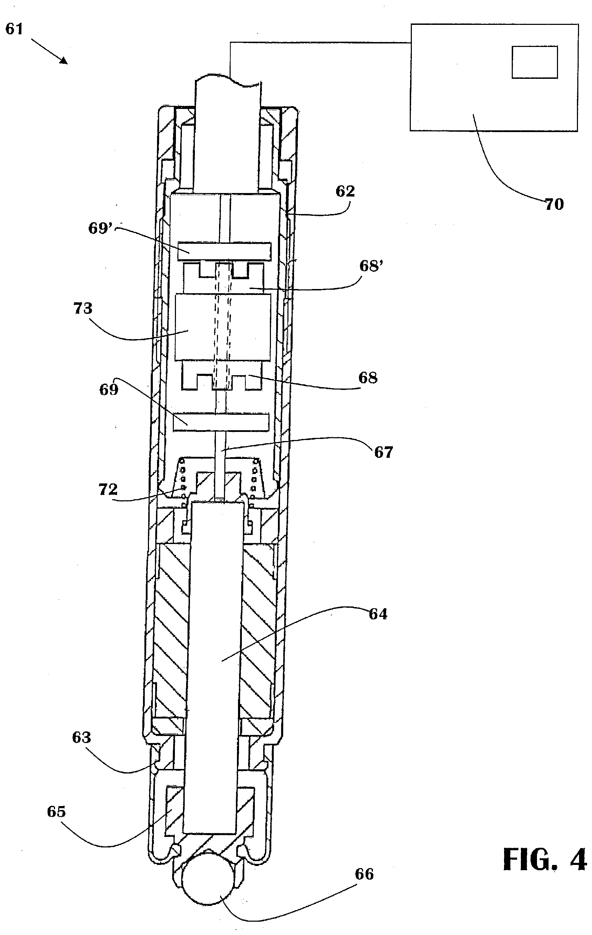

Figure 4 shows a further embodiment according to the present invention, in particular an axial measuring head 61 comprising a stationary support, or external casing 62, which is made for example of steel and is substantially cylindrical shaped. The external casing 62 defines a longitudinal geometrical axis and a substantially cylindrical, internal surface. A shaft 64 with an external, substantially cylindrical, surface is inserted in the casing 62 and is movable with respect to the latter, axially guided in a per se known way. A support element 65 for a feeler 66, adapted to touch the piece to be checked, is fixed to one end of the shaft 64.

A stem 67 is connected to the other end of the shaft 64. Shaft 64 and stem 67 define together an elongate element which is part of a movable support.

A couple of inductive transducers is arranged inside the casing 62 and includes two cores made of ferromagnetic material with windings 68, 68' and two matching elements with a substantially plane surface made of ferromagnetic material, or plates 69, 69'. The plates 69, 69' include a central through hole enabling to fasten them to the stem 67. The cores 68, 68' are fixed, for example, to a supporting element 73 arranged inside the casing 62 and integral with it, and include a central through hole, through which the stem 67 passes. The plates 69, 69' are fixed to the stem 67 and move with it, while the cores 68, 68' are stationary and enable the elongate element to pass through them. The two cores 68, 68' are arranged in such a way that the respective measuring surfaces face in the opposite sense and each faces the corresponding plate 69, 69' .

The cores 69, 69' are coupled to an external processing unit 70 by means of electrical cables.

A thrust device 72 includes a compression spring arranged near the end of the shaft 64, which is connected to the stem 67, to apply a thrust to the shaft 64 with respect to the casing 62 and keep the shaft 64 in a rest position, when the feeler 66 doesn't touch the piece to be checked.

The operation of the axial head is the following.

In the rest position, that is when the feeler 66 doesn't touch the piece to be checked, the shaft 64 and the stem 67 connected thereto are positioned in such a way that the plate 69' is in contact with the respective core 68', or with surfaces close to the core 68' or integral with it, and the other plate 69 lies at a distance from the core 68 which corresponds in substance to the total measuring range of the device.

After the contact between the feeler 66 and the surface to be checked, the shaft 64 translates inside the casing 62 causing the stem 67 and the plates 69, 69' fixed thereto to translate, too. This causes the plate 69' to move away from the core 68' and concurrently the plate 69 to approach the core 68. The variation of the mutual distance between plate and core generates signals which are transmitted by each transducer to the processing unit 70. As explained with regard to the measuring cells previously described, the processing unit 70 identifies which of the received signals can be considered as measuring signals included in the measuring range of one of the transducers and are indicative of the dimensions of the piece to be checked.

The embodiments hereinbefore described and shown in the figures comprise inductive transducers, each including a matching element with a substantially plane surface, or plate, and a core with windings, for example a pot core.

The operation of each of the transducers is known and is hereinafter described in general terms.

The windings of the core are fed by an alternating current generating a magnetic field which interacts with the plate and induces a current in the plate itself. This current generates its own magnetic field which opposes the magnetic field of the windings. A circuit is coupled to the core and indicates the impedance.

When one of the parts of the transducer moves with respect to the other because of the contact between the piece and the feeler and the consequent angular movement of the arm (or linear movement of the shaft) carrying the plate, the impedance of the circuit varies. The impedance variation can be observed by detecting the voltage variation across the circuit.

In the preferred embodiment of the invention, the core carrying the windings can be made of MUMETAL® that is a metallic alloy composed of different percentages of nickel, iron, copper and molybdenum and notable for its high magnetic permeability. The use of this metallic alloy grants the possibility to have high flexibility both in terms of geometrical shapes and dimensions that can be obtained. This represents a big advantage with respect to known solutions featuring the core made, for instance, of ferrite, a material whose working is by far harder. The high workability of the MUMETAL enables indeed to obtain cores whose dimensions and shapes are suitable for the specific type of checking which has to be performed. While the geometrical shapes and dimensions of the cores made of ferrite and available on the market are limited, MUMETAL, that, contrary to the ferrite, can be machined by machine-tools, ensures a high flexibility, allowing to obtain particular shapes not bound to predetermined dimensions. It is possible, for example, to obtain cores having smaller dimensions than the traditional cores made of ferrite while generating the same magnetic field. This provides remarkable advantages not only in terms of overall dimensions but also in terms of production costs.

Even though it is not essential to the transducer operation, even the plate connected to the arm, or at least its substantially plane surface facing the corresponding core, can be made of MUMETAL and have the same advantages in terms of flexibility in getting shapes and dimensions, as described with reference to the core.

A further, important advantage of using the MUMETAL is the possibility to fix the magnetic core, and the plate if it is made of MUMETAL too, to the corresponding support by laser welding. Contrary to the cores made of ferrite which are fixed by gluing, the welding enables to avoid problems due to wrong positioning of the transducer caused for example by a gluing which is wrongly made or is less resistant, or by unwanted and undetected displacements of the parts owing to thermal expansions of the glue. The fixing technique by welding can be used for any core independently from its shape or dimension.

The device according to the invention can include other kinds of known transducers, such as LVDT or capacitive transducers.

According to an alternative embodiment, which falls as well within the scope of the present invention, the mutual positioning of feeler, fulcrum and transducers are different from the one above described. For example, the structure of the movable support can be such that it defines a first class lever, which means that the fulcrum is fixed at the midpoint of the movable support and the transducers are fixed to portions of the movable support on the sides of the fulcrum.

A different solution wherein in the rest position the first parts of the transducers are arranged at mutual distances that are different from what has been described above, for instance substantially at the same distances from the respective second parts of the transducers, is not shown herein but falls within the scope of the present invention, too, even though it is not so advantageous as the arrangement shown and described above.

For example, in a solution similar to the embodiment of figure 3, an additional feeler is connected to the end of the base body 42 opposite to the one carrying the feeler 51, to cause also movements of the movable support in opposite sense as a consequence of the additional feeler touching a workpiece to be checked. In this case, the arrangement of the parts as shown in figure 3 doesn't correspond to an intermediate measuring position but to the rest position before the checking operation starts.

In all the embodiments hereinbefore described and shown in the figures, the plates are fixed to the movable support and the cores are fixed to the stationary support. It is possible, however, to invert the positions of the parts of one or both the transducers, that is to fix, at least for one of the two transducers, the core to the movable support and the plate to the stationary support without changing either the structure or the operation of the device.

A control system to adjust the mutual distances between the first parts and the second parts of the transducers, at least of one of them, before the checking operation, for instance similar to part or all of the adjusting system described with reference to the measuring cell shown in figure 2, can be applied to any of the embodiments described hereinbefore.

Object of the present invention is to provide a device that enables to obtain a measuring range which is larger, for example almost double the measuring range of the known devices including a single transducer.

In practice, it is possible, however, that the total measuring range of the device, even though it corresponds substantially to the sum of the single measuring ranges, is not double the measuring range of a single transducer, because, as previously stated, the transducers can have different measuring ranges.

## Claims

1. Device for checking dimensions of a mechanical piece including:
- a stationary support (2;22,34;43,47;62),
- a movable support (4,6;26,28;42,46,46';64,67) which is connected to the stationary support (2;22,34;43,47;62) and carries at least one feeler (5;29;51;66) adapted to contact the mechanical piece and to perform a displacement, the movable support (4,6;26,28;42,46,46';64,67) being adapted to perform a movement with respect to the stationary support (2;22,34;43,47;62) as a result of the displacement of the feeler (5;29;51;66);
- a couple of transducers including each a first part (7,7';27,27';44,44';69,69') fixed to one of said stationary support (2;22,34;43,47;62) and movable support (4,6;26,28;42,46,46';64,67) and a second part (10,10';24,24';45,45';68,68') fixed to the other of said stationary support (2;22,34;43,47;62) and movable support (4,6;26,28;42,46,46';64,67), the first part (7,7';27,27';44,44';69,69') and the second part (10,10';24,24';45,45';68,68') facing each other, and each transducer being adapted to generate a signal indicative of a variation in the distance between the respective first part (7,7';27,27';44,44';69,69') and second part (10,10';24,24';45,45';68,68'), each transducer having a measuring range delimited at least by a maximum distance between the respective first part (7,7';27,27';44,44';69,69') and second part (10,10';24,24';45,45';68,68');
- a processing unit (16;35;52;70) connected to the couple of transducers and adapted to receive the signals generated by said couple of transducers, and to process them to obtain a value indicative of the dimensions of the mechanical piece;
**characterized in that**
- said processing unit (16;35;52;70) identifies which of the signals generated by the transducers is included in the measuring range of the respective transducers and is a measuring signal,
- said first and second parts of the couple of transducers are arranged at predetermined mutual distances in such a way that said measuring ranges are contiguous, and
- the measuring range of the device is substantially larger than the measuring range of each transducer.

2. Device according to claim 1, wherein said first and second parts of the couple of transducers are arranged at said predetermined mutual distances in such a way that the measuring ranges of the transducers overlap at an overlapping area and the signals generated by the transducers at said overlapping area are both measuring signals, the processing unit (16;35;52;70) considering just one of the two signals according to known selection settings.

3. Device according to claim 1 or 2, wherein said first and second parts of the couple of transducers are arranged at said predetermined mutual distances in such a way that when the first part (7;27';44;69') and the second part (10;24';45;68') of one of the transducers are arranged at a minimum mutual distance, the first part (7';27;44';69) and the second part (10';24;45';68) of the other transducer are arranged at a predetermined mutual distance defining the measuring range of the device.

4. Device according to any one of claims 1 to 3, wherein in a rest position of the movable support (4,6;26,28;42,46,46';64,67) with respect to the stationary support (2;22,34;43,47;62), the first part (7:27';44;69') and the second part (10;24';45;68') of one of said transducers are in contact with each other and the first part (7';27;44';69) and the second part (10';24;45';68) of the other of said transducers are arranged at a mutual distance which is bigger than the maximum distance delimiting the measuring range of each transducer.

5. Device according to claim 4, wherein in said rest position of the movable support (4,6;26,28;42,46,46';64,67) with respect to the stationary support (2;22,34;43,47;62), the first part (7';27;44';69) and the second part (10';24;45';68) of said other of said transducers are arranged at a mutual distance which is substantially equal to the sum of the maximum distances delimiting the measuring ranges of said two transducers.

6. Device according to any one of the preceding claims, wherein the movable support (4,6;26,28;42,46,46') is connected to the stationary support (2;22,34;43,47) by means of at least one fulcrum (3;25;50) and is adapted to perform a rotation movement with respect to the stationary support (2;22,34;43,47).

7. Device according to claim 6, wherein the movable support (4,6;26,28;42,46,46') includes two rigidly connected portions with mutually parallel sides, which face each other, and the stationary support (2;22,34;43,47) includes a main body (2,22,43) and a central portion with two opposite areas, said central portion of the stationary support (2;22,34;43,47) being arranged between the mutually parallel sides of said portions of the movable support (4,6;26,28;42,46,46'), the first parts (7,7';27,27';44,44') and the second parts (10,10';24,24';45,45') of the transducers being fixed to said parallel sides of the portions of the movable support (4,6;26,28;42,46,46') and to the opposite areas of the central portion of the stationary support (2;22,34;43,47), or vice versa.

8. Device according to claim 7, wherein the movable support includes an arm (6) to which said two portions with mutually parallel sides (8,8') are rigidly connected.

9. Device according to claim 7 or claim 8, wherein the main body (2) includes an opening (12), the stationary support also including a closing element (13) connected to the main body (2) in a removable way at said opening (12), the central portion with two opposite areas being rigidly connected to the closing element (13).

10. Device according to one of claims 7 to 9, wherein the central portion with two opposite areas is connected in an adjustable way to said main body (2;22) of the stationary support, the portions of the movable support (4,6;26,28) being mutually connected in an adjustable way, in order to define the distance between said mutually parallel sides.

11. Device according to claim 10, wherein the movable support includes an L-shaped support (28) defining one of said portions with mutually parallel sides.

12. Device according to claim 7 or claim 8, including a parallelogram-shaped structure defined by the stationary support (43,47), the movable support (42,46,46') and a couple of elements (49,49'), each carrying two fulcra (50), which connect said stationary support (43,47) to said movable support (42,46,46').

13. Device according to one of claims 1 to 5, wherein the movable support includes an elongate element (64,67) which defines a longitudinal axis, is axially movable with respect to the stationary support (62), and carries the feeler (66) at one end.

14. Device according to claim 13, wherein the first parts (69,69') or the second parts (68,68') of the couple of transducers are fixed to portions of the stationary support (62) which include a through hole through which the elongate element (64,67) passes.

15. Device according to one of the preceding claims, wherein the first part (7,7';27,27';44,44';69,69') of each transducer includes a matching element with a substantially plane surface made of ferromagnetic material, and the second part (10,10';24,24';45,45';68,68') of each transducer includes a core made of ferromagnetic material with windings.

16. Device according to claim 15, wherein the core with windings is made of MUMETAL®.

17. Device according to claim 15 or claim 16, wherein the matching element with a substantially plane surface is made of MUMETAL.

18. Device according to any one of the preceding claims, including a control system to adjust the mutual distances between the first part and the second part of at least one of the transducers.

## Patentansprüche

1. Vorrichtung zum Überprüfen der Abmessungen eines mechanischen Bauteils, einschließlich:
- einer stationären Halterung (2; 22, 34; 43, 47; 62),
- einer beweglichen Halterung (4, 6; 26, 28; 42, 46, 46'; 64, 67), die mit der stationären Halterung (2; 22, 34; 43, 47; 62) verbunden ist und mindestens einen Fühler (5; 29; 51; 66), der dazu angepasst ist, das mechanische Bauteil zu berühren und eine Verschiebung auszuführen, wobei die bewegliche Halterung (4, 6; 26, 28; 42, 46, 46'; 64, 67) so angepasst ist, dass sie bezüglich der stationären Halterung (2; 22, 34; 43, 47; 62) infolge der Verschiebung des Fühlers (5; 29; 51; 66) eine Bewegung ausführt;
- ein Paar von Wandlern, die jeweils einen ersten Teil (7, 7'; 27, 27'; 44, 44'; 69, 69'), der an einer der stationären Halterungen (2; 22, 34; 43, 47; 62) und beweglichen Halterungen (4, 6; 26, 28; 42, 46, 46'; 64, 67) befestigt ist und einen zweiten Teil (10, 10'; 24, 24'; 45, 45'; 68, 68'), der an den anderen der stationären (2; 22, 34; 43, 47; 62) und beweglichen (4, 6; 26, 28; 42, 46, 46'; 64, 67) Halterungen befestigt ist, beinhalten, wobei der erste Teil (7, 7', 27, 27'; 44, 44'; 69, 69') und der zweite Teil (10, 10'; 24, 24'; 45, 45'; 68, 68 ') einander zugewandt sind und jeder Wandler angepasst ist, um ein Signal zu erzeugen, das eine Änderung des Abstandes zwischen dem jeweiligen ersten Teil (7, 7'; 27, 27'; 44, 44'; 69, 69') und dem zweiten Teil (10, 10'; 24, 24', 45, 45'; 68, 68') anzeigt, wobei jeder Wandler einen Messbereich aufweist, der mindestens durch einen maximalen Abstand zwischen dem jeweiligen ersten Teil (7, 7'; 27, 27'; 44, 44'; 69, 69') und zweiten Teil (10, 10'; 24, 24'; 45, 45'; 68, 68') begrenzt ist;
- eine Verarbeitungseinheit (16; 35; 52; 70), die mit dem Wandlerpaar verbunden und auf den Empfang der von dem Wandlerpaar erzeugten Signale ausgerichtet ist, und diese zu verarbeiten, um einen Wert zu erhalten, der die Abmessungen des mechanischen Bauteils anzeigt; was **dadurch gekennzeichnet ist,**
- **dass** die Verarbeitungseinheit (16; 35; 52; 70) identifiziert, welches der von den Wandlern erzeugten Signale in dem Messbereich der jeweiligen Wandler enthalten und ein Messsignal ist,
- **dass** der erste und der zweite Teil des Wandlerpaares in vorbestimmten gegenseitigen Abständen derart angeordnet sind, dass die Messbereiche aneinander angrenzend sind, und
- **dass** der Messbereich der Vorrichtung wesentlich größer ist als der Messbereich jedes Wandlers.

2. Vorrichtung nach Anspruch 1, wobei der erste und zweite Teil des Wandlerpaares in den vorbestimmten gegenseitigen Abständen in einer Weise angeordnet sind, dass sich die Messbereiche der Wandler in einem Überlappungsbereich überlappen und die von den Wandlern erzeugten Signale in dem Überlappungsbereich beide Messsignale sind, wobei die Verarbeitungseinheit (16; 35; 52; 70) nur eines der zwei Signale gemäß bekannten Auswahleinstellungen berücksichtigt.

3. Vorrichtung nach Anspruch 1 oder 2, wobei der erste und zweite Teil des Wandlerpaares in den vorbestimmten gegenseitigen Abständen derart angeordnet sind, dass, wenn der erste Teil (7; 27'; 44; 69') und der zweite Teil (10; 24'; 45; 68') eines der Wandler in einem minimalen gegenseitigen Abstand angeordnet ist, der erste Teil (7'; 27; 44'; 69) und der zweite Teil (10'; 24; 45'; 68) des anderen Wandlers in einem vorbestimmten gegenseitigen Abstand angeordnet ist, der den Messbereich der Vorrichtung definiert.

4. Vorrichtung nach einem der Ansprüche 1 bis 3, wobei in einer Ruhelage der beweglichen Halterung (4, 6; 26, 28; 42, 46, 46'; 64, 67) in Bezug auf die stationäre Halterung (2; 22, 34; 43, 47; 62), der erste Teil (7; 27'; 44; 69') und der zweite Teil (10; 24'; 45; 68') eines der Wandler miteinander in Kontakt sind und der erste Teil (7'; 27; 44'; 69) und der zweite Teil (10'; 24; 45'; 68) des anderen der Wandler in einem gegenseitigen Abstand angeordnet sind, der größer als der Maximalabstand ist, der den Messbereich jedes Wandlers begrenzt.

5. Vorrichtung nach Anspruch 4, wobei in der Ruheposition der beweglichen Halterung (4, 6; 26, 28; 42, 46, 46'; 64, 67) in Bezug auf die stationäre Halterung (2; 22, 34; 43, 47; 62), der erste Teil (7'; 27; 44'; 69) und der zweite Teil (10'; 24; 45'; 68) des anderen der Wandler in einem gegenseitigen Abstand angeordnet sind, der im Wesentlichen gleich ist zu der Summe der maximalen Abstände, die die Messbereiche der zwei Wandler begrenzen.

6. Vorrichtung nach einem der vorhergehenden Ansprüche, wobei die bewegliche Halterung (4, 6; 26, 28; 42,46, 46') mit der stationären Halterung (2; 22, 34; 43, 47) mittels mindestens eines Drehpunktes (3; 25; 50) verbunden und angepasst ist, um eine Drehbewegung in Bezug auf die stationäre Halterung (2; 22, 34; 43, 47) auszuführen.

7. Vorrichtung nach Anspruch 6, wobei die bewegliche Halterung (4, 6; 26, 28; 42, 46, 46') zwei starr verbundene Abschnitte mit zueinander parallelen Seiten beinhaltet, die einander zugewandt sind, und wobei die stationäre Halterung (2; 22, 34; 43, 47) einen Hauptkörper (2, 22, 43) und einen zentralen Abschnitt mit zwei gegenüberliegenden Bereichen beinhaltet, wobei der zentrale Abschnitt der stationären Halterung (2; 22, 34; 43, 47) zwischen den zueinander parallelen Seiten der Abschnitte der beweglichen Halterung (4, 6; 26, 28; 42, 46, 46') angeordnet ist, und die ersten Teile (7, 7'; 27, 27'; 44, 44') und zweiten Teile (10, 10'; 24, 24'; 45, 45') der Wandler an den parallelen Seiten der Abschnitte der beweglichen Halterung (4, 6; 26, 28; 42, 46, 46') und an den gegenüberliegenden Bereichen des zentralen Abschnitts der stationären Halterung (2; 22, 34; 43, 47) befestigt sind, oder umgekehrt.

8. Vorrichtung nach Anspruch 7, wobei die bewegliche Halterung einen Arm (6) aufweist, mit dem die zwei Abschnitte mit zueinander parallelen Seiten (8, 8') starr verbunden sind.

9. Vorrichtung nach Anspruch 7 oder Anspruch 8, wobei der Hauptkörper (2) eine Öffnung (12) aufweist, wobei die stationäre Halterung auch ein Schließelement (13) aufweist, das mit dem Hauptkörper (2) an der Öffnung (12) abnehmbar verbunden ist, wobei der zentrale Abschnitt mit zwei gegenüberliegenden Bereichen starr mit dem Schließelement (13) verbunden ist.

10. Vorrichtung nach einem der Ansprüche 7 bis 9, wobei der zentrale Abschnitt mit zwei gegenüberliegenden Bereichen in einer verstellbaren Weise mit dem Hauptkörper (2; 22) der stationären Halterung verbunden ist, wobei die Abschnitte der beweglichen Halterung (4, 6; 26, 28) miteinander in einer verstellbaren Weise verbunden sind, um den Abstand zwischen den zueinander parallelen Seiten zu definieren.

11. Vorrichtung nach Anspruch 10, wobei die bewegliche Halterung eine L-förmige Halterung (28) aufweist, die einen der Abschnitte mit zueinander parallelen Seiten definiert.

12. Vorrichtung nach Anspruch 7 oder Anspruch 8, mit einer parallelogrammförmigen Struktur, die durch die stationäre Halterung (43, 47), die bewegliche Halterung (42, 46, 46') und ein Elementepaar (49, 49') definiert ist, die jeweils zwei Drehpunkte (50) tragen, die die stationäre Halterung (43, 47) mit der beweglichen Halterung (42, 46, 46') verbinden.

13. Vorrichtung nach einem der Ansprüche 1 bis 5, wobei die bewegliche Halterung ein längliches Element (64, 67) beinhaltet, das eine Längsachse definiert, das axial beweglich zu der stationären Halterung (62) ist und den Fühler (66) an einem Ende trägt.

14. Vorrichtung nach Anspruch 13, wobei die ersten Teile (69, 69') oder die zweiten Teile (68, 68') des Wandlerpaares an Abschnitten der stationären Halterung (62) befestigt sind, die eine Durchgangsöffnung beinhalten, durch die das längliche Element (64, 67) passiert.

15. Vorrichtung nach einem der vorhergehenden Ansprüche, wobei der erste Teil (7, 7'; 27, 27'; 44, 44'; 69, 69') jedes Wandlers ein Gegenstück mit einer im Wesentlichen ebenen Oberfläche aus ferromagnetischem Material aufweist, und der zweite Teil (10, 10'; 24, 24'; 45, 45'; 68, 68') jedes Wandlers einen Kern aus ferromagnetischem Material mit Wicklungen enthält.

16. Vorrichtung nach Anspruch 15, wobei der Kern mit Wicklungen aus MUMETAL® hergestellt ist.

17. Vorrichtung nach Anspruch 15 oder Anspruch 16, wobei das Gegenstück mit einer im Wesentlichen ebenen Fläche aus MUMETAL besteht.

18. Vorrichtung nach einem der vorhergehenden Ansprüche, mit einem Steuersystem zum Einstellen der gegenseitigen Abstände zwischen dem ersten Teil und dem zweiten Teil von mindestens einem der Wandler.

## Revendications

1. Dispositif pour vérifier les dimensions d'une pièce mécanique comprenant :
- un support fixe (2;22,34;43,47;62),
- un support mobile (4,6;26,28;42,46,46';64,67) relié au support fixe (2;22,34;43,47;62) et portant au moins un palpeur (5;29;51;66) adaptée pour toucher la pièce mécanique et effectuer un déplacement, le support mobile (4,6;26,28;42,46,46';64,67) étant adapté pour effectuer un mouvement par rapport au support fixe (2;22,34;43,47;62) à la suite du déplacement du palpeur (5;29;51;66) ;
- un couple de transducteurs comprenant chacun une première partie (7,7';27,27';44,44';69,69') fixée à l'un desdits support fixe (2;22,34;43,47;62) et support mobile (4,6:26,28;42,46,46';64,67) et une deuxième partie (10,10';24,24';45,45';68,68') fixée à l'autre desdits support fixe (2;22,34;43,47;62) et support mobile (4,6;26,28;42,46,46';64,67), la première partie (7,7';27,27';44,44';69,69') et la deuxième partie (10,10';24,24';45,45';68,68') étant face à face, et chaque transducteur étant adapté pour générer un signal indiquant une variation de la distance entre la première partie (7,7';27,27';44,44';69,69') et la deuxième partie (10,10';24,24';45,45';68,68') respectives, chaque transducteur ayant une plage de mesure délimitée au moins par une distance maximale entre la première partie (7,7';27,27';44,44';69,69') et la deuxième partie (10,10';24,24';45,45';68,68') respectives;
- une unité de traitement (16;35;52;70) reliée au couple de transducteurs et adaptée pour recevoir les signaux générés par ledit couple de transducteurs, et les traiter afin d'obtenir une valeur indicative des dimensions de la pièce mécanique ;
**caractérisé en ce que**
- ladite unité de traitement (16;35;52;70) identifie quel signal généré par les transducteurs est inclus dans la plage de mesure des transducteurs respectifs et constitue un signal de mesure,
- lesdites première et deuxième parties du couple de transducteurs sont disposées à des distances mutuelles prédéfinies de telle sorte que lesdites plages de mesure soient adjacentes et
- la plage de mesure du dispositif est sensiblement supérieure à la plage de mesure de chaque transducteur.

2. Dispositif selon la revendication 1, dans lequel lesdites première et deuxième parties du couple de transducteurs sont disposées auxdites distances mutuelles prédéfinies de telle sorte que les plages de mesure des transducteurs se chevauchent dans une zone de chevauchement et que les signaux générés par les transducteurs dans ladite zone de chevauchement soient tous les deux des signaux de mesure, l'unité de traitement (16;35;52;70) prenant en compte un seul des deux signaux selon des paramètres de sélection connus.

3. Dispositif selon la revendication 1 ou 2, dans lequel lesdites première et deuxième parties des transducteurs sont disposées auxdites distances mutuelles prédéfinies de telle sorte que lorsque la première partie (7;27';44;69') et la deuxième partie (10;24';45;68') de l'un des transducteurs sont disposées à une distance mutuelle minimale, la première partie (7';27;44';69) et la deuxième partie (10';24;45';68) de l'autre transducteur sont disposées à une distance mutuelle prédéfinie, définissant la plage de mesure du dispositif.

4. Dispositif selon l'une quelconque des revendications 1 à 3, dans lequel, dans une position de repos du support mobile (4,6;26,28;42,46,46';64,67), par rapport au support fixe (2;22,34;43,47;62), la première partie (7;27';44;69') et la deuxième partie (10;24';45;68') de l'un desdits transducteurs sont en contact l'une avec l'autre et la première partie (7';27:44':69) et la deuxième partie (10';24;45';68) de l'autre desdits transducteurs sont disposées à une distance mutuelle supérieure à la distance maximale délimitant la plage de mesure de chaque transducteur.

5. Dispositif selon la revendication 4, dans lequel, dans ladite position de repos du support mobile (4,6;26,28;42,46';64,67) par rapport au support fixe (2;22,34;43,47;62), la première partie (7';27;44';69) et la deuxième partie (10';24;45';68) dudit autre desdits transducteurs sont disposées à une distance mutuelle substantiellement égale au total des distances maximales délimitant les plages de mesure desdits deux transducteurs.

6. Dispositif selon l'une quelconque des revendications précédentes, dans lequel le support mobile (4,6;26,28;42,46,46') est relié au support fixe (2;22,34;43,47) au moyen d'au moins un pivot (3;25;50) et il est adapté pour effectuer un mouvement de rotation par rapport au support fixe (2;22,34;43,47).

7. Dispositif selon la revendication 6, dans lequel le support mobile (4,6;26,28;42,46,46') - inclut deux portions rigidement reliées avec des côtés mutuellement parallèles, face à face, et le support fixe (2;22,34;43,47) comprend un corps principal (2,22,43) et une portion centrale avec deux zones opposées, ladite portion centrale du support fixe (2;22,34;43,47) étant disposée entre les côtés mutuellement parallèles desdites portions du support mobile (4,6;26,28;42,46,46'), les premières parties (7,7';27,27';44,44') et les deuxièmes parties (10,10';24,24';45,45') des transducteurs étant fixées auxdites côtés parallèles des portions du support mobile (4,6;26,28;42,46,46') et aux zones opposées de la portion centrale du support fixe (2;22,34;43,47), ou inversement.

8. Dispositif selon la revendication 7, dans lequel le support mobile comprend un bras (6) auquel lesdites deux portions avec des côtés mutuellement parallèles (8,8') sont reliées de façon rigide.

9. Dispositif selon la revendication 7 ou 8, dans lequel le corps principal (2) comprend une ouverture (12), le support fixe comprenant également un élément de fermeture (13) relié au corps principal (2) de manière amovible au niveau de ladite ouverture (12), la portion centrale avec deux zones opposées étant fermement reliée à l'élément de fermeture (13).

10. Dispositif selon l'une des revendications 7 à 9, dans lequel la portion centrale avec deux zones opposées est reliée de manière réglable audit corps principal (2;22) du support fixe, les portions du support mobile (4,6;26,28) étant reliées mutuellement de manière ajustable, afin de définir la distance entre lesdits côtés mutuellement parallèles.

11. Dispositif selon la revendication 10, dans lequel le support mobile comprend un support en forme de L (28) définissant l'une desdites portions avec des côtés mutuellement parallèles.

12. Dispositif selon la revendication 7 ou 8, comprenant une structure en forme de parallélogramme définie par le support fixe (43,47), le support mobile (42,46,46') et un couple d'éléments (49,49'), chacun portant deux pivots (50), reliant ledit support fixe (43,47) audit support mobile (42,46,46').

13. Dispositif selon l'une des revendications 1 à 5, dans lequel le support mobile comprend un élément allongé (64,67) qui définit un axe longitudinal, est axialement amovible par rapport au support fixe (62) et porte le palpeur (66) à une extrémité.

14. Dispositif selon la revendication 13, dans lequel les premières parties (69,69') ou les deuxièmes parties (68,68') du couple de transducteurs sont fixées à des portions du support fixe (62) comprenant un trou à travers lequel l'élément allongé (64,67) passe.

15. Dispositif selon l'une des revendications précédentes, dans lequel la première partie (7,7';27,27';44,44';69,69') de chaque transducteur comprend un élément correspondant avec une surface substantiellement plane en matériau ferromagnétique et la deuxième partie (10,10';24,24';45,45';68,68') de chaque transducteur comprend un noyau en matériau ferromagnétique.

16. Dispositif selon la revendication 15, dans lequel le noyau avec des enroulements est en MUMETAL®.

17. Dispositif selon la revendication 15 ou 16, dans lequel l'élément correspondant avec une surface substantiellement plane est en MUMETAL.

18. Dispositif selon l'une quelconque des revendications précédentes, comprenant un système de contrôle permettant d'adapter les distances mutuelles entre la première partie et la deuxième partie d'au moins un des transducteurs.
